# FASCICULE DE BREVET EUROPEEN

(11) **EP 4 722 957 B1**
(45) Date de publication et mention de la délivrance du brevet: **19.08.2026**
(21) Numéro de dépôt: 25204223.9
(22) Date de dépôt: 24.09.2025
(51) Int. Cl.: G06F 21/44, G06F 21/60, G06F 9/54, H04L 9/32

(54) **PROCÉDÉ DE COMMUNICATION INTER PROCESSUS SÉCURISÉE AU SEIN DU SYSTÈME D'EXPLOITATION D'UN ORDINATEUR**
VERFAHREN ZUR SICHEREN INTERPROZESSKOMMUNIKATION IN EINEM RECHNERSYSTEM
METHOD FOR SECURE INTERPROCESS COMMUNICATION WITHIN THE OPERATING SYSTEM OF A COMPUTER

(30) Priorité: 03.10.2024 FR 2410654
(43) Date de publication de la demande: 08.04.2026
(73) Titulaire: THEGREENBOW, 75009 Paris (FR)
(72) Inventeur: HERMANS, Filip, 77000 Melun (FR)
(74) Mandataire: Dupuis-Latour, Dominique

(56) Documents cités:
- US-A1- 2017 257 282
- US-A1- 2018 278 611
- BRASSER FERDINAND ET AL: "TyTAN tiny trust anchor for tiny devices", PROCEEDINGS OF THE 34TH ACM SIGMOD-SIGACT-SIGAI SYMPOSIUM ON PRINCIPLES OF DATABASE SYSTEMS, ACMPUB27, NEW YORK, NY, USA, 7 June 2015 (2015-06-07), pages 1 - 6, XP058511010, ISBN: 978-1-4503-3550-8, DOI: 10.1145/2744769.2744922
- WILL NEWTON C ET AL: "Trusted Inter-Process Communication Using Hardware Enclaves", 2021 IEEE INTERNATIONAL SYSTEMS CONFERENCE (SYSCON), IEEE, 15 April 2021 (2021-04-15), pages 1 - 7, XP033922814, DOI: 10.1109/SYSCON48628.2021.9447066

## Description

L'invention concerne la communication entre processus (*Inter-Process Communication,* IPC) au sein du système d'exploitation d'un même ordinateur, où les processus communiquent localement entre eux par l'intermédiaire de tubes attribués par le système d'exploitation (ci-après "OS").

Ici le terme de "tube" doit être entendu au sens qu'il a notamment dans la terminologie POSIX/Unix ou Windows (marques déposées), à savoir des canaux de communication permettant de gérer l'échange de données d'un processus à un autre. Ces tubes (*pipes* ou *pipelines,* en anglais) peuvent notamment être catégorisés en tubes anonymes (*anonymous pipes*), créés à l'initiative de l'un des processus et qui disparaissent après achèvement des processus, et tubes nommés (*named pipes*), qui sont liés à l'OS et subsistent après achèvement des processus.

### Contexte de l'invention

Les programmes informatiques se présentent généralement sous la forme de multiples modules, comprenant chacun un code exécutable d'un processus spécifique. Les modules, qui s'exécutent à différents niveaux de privilège, sont interdépendants et doivent échanger des données entre eux au sein de l'OS d'une manière parfaitement sécurisée, qui ne puisse pas être interceptée ou altérée par des tiers (attaques dites *"man in the middle",* MITM) ou illicitement déroutées par modification d'adresse (attaques dites *"spoofing"*), etc. ou encore par des attaques dites *"pipe squatting"* qui sont des attaques par déni de service (DOS) mettant en cause le mécanisme de synchronisation entre processus de l'OS lors de l'utilisation de tubes nommés, si l'identifiant du tube est connu de l'attaquant.

Pour pallier ces risques, un certain nombre de mesures de sécurisation et d'authentification des échanges entre processus au sein de l'OS ont été proposées.

Diverses techniques de sécurisation en ce sens sont décrites notamment par :
- Ferdinand Brasser et al., "TyTAN Tiny Trust Anchor for Tiny Devices", Proceedings of the 34th ACM SIGMOD-SIGACT-SIGAI Symposium on Principles of Database Systems, ACMPUBZ7, New York, NY, USA, 7 juin 2015, pp. 1-6, XP058511010, DOI: 10.1145/2744769.2744922, ISBN: 978-1-4503-3550-8, Sections 3,4 ;
- Newton C. Will et al., "Trusted Inter-Process Communication Using Hardware Enclaves", 2021 IEEE International Systems Conference (SYSCON), IEEE, 15 avril 2021, pp. 1-7, XP033922814, DOI: 10.1109/SYSCON48628.2021.9447066, Sections II.B, IV.B ; et
- Tan et al. : US 2018/278611 A1.
- US 2017/0257282 A1 décrit, en se référant notamment à la figure 7 et aux alinéas [0076] à [0085], un mécanisme visant à sécuriser la communication interprocessus (IPC) entre un « dispatcher 220 » et des autres programmes composants. Ledit « dispatcher 220 », s'exécutant avec des privilèges root en sein d'un système d'exploitation, se connecte à la mémoire partagée et crée un socket IPC (par exemple, un socket de domaine Unix,). Il instancie ensuite les programmes composants manquants (si nécessaire) et stocke leurs informations d'instanciation - identité de l'utilisateur, identifiant de processus (PID) et heure de création/démarrage
- dans ladite mémoire partagée 250. Chaque programme composant se connecte ensuite à la socket IPC du « dispatcher 220 » et demande la clé privée afin de s'exécuter. En réponse, le « dispatcher 220 » obtient les informations d'exécution correspondantes directement auprès du système d'exploitation et les compare aux données d'instanciation précédemment enregistrées dans la mémoire partagée. Ce n'est que si les deux ensembles d'informations correspondent exactement que le « dispatcher 220 » transmet la clé privée (ou toute autre information sécurisée) via le socket IPC au composant demandeur (étape 730) ; dans le cas contraire, le « dispatcher 220 » ferme le socket (étape 735). Ce même « dispatcher 220 » crée et sécurise également les files d'attente de messages POSIX 235 utilisées entre les gestionnaires de connexion et le routeur de messages, établissant ainsi une chaîne de confiance vérifiable qui garantit que seuls les composants légitimement instanciés peuvent échanger des données sensibles via l'IPC.

La sécurisation de l'IPC est assurée dès lors que (i) un tube ne peut être établi que s'il n'y a qu'un seul processus de chaque côté du tube, (ii) seuls des processus reliés au tube peuvent accéder aux données circulant dans le tube, (iii) un processus d'un côté du tube peut identifier le processus qui est de l'autre côté du tube, et (iv) l'exécutable qui a été utilisé pour créer un processus peut être déterminé à partir de son identifiant de processus.

Ces exigences de sécurité font partie des fonctionnalités typiquement spécifiées sous POSIX ou Windows.

Pour éviter les attaques de type MITM, chaque processus doit identifier le processus avec lequel il doit communiquer de l'autre côté du tube. Par exemple, pour un système d'exploitation Windows un certificat est intégré à la création du module de processus pour permettre son authentification ultérieure, par une commande *WinVerifyTrust.*

Toutefois, ces mesures de précaution n'assurent pas une protection à l'encontre de toutes les tentatives d'attaque par des tiers. Par exemple, il serait possible pour un tiers de remplacer une version récente d'un exécutable par une version plus ancienne, vulnérable, de ce même exécutable ayant les mêmes propriétés apparentes, le même identifiant de processus et le même certificat intégré, avec pour effet de leurrer les protections existantes et de rendre indétectable l'intrusion dans l'OS.

### Résumé de l'invention

Le but de l'invention est d'apporter une solution à ces diverses difficultés, en assurant une protection complète de l'IPC au sein d'un OS, sans possibilité pour un tiers d'intervenir ou d'intercepter avec succès les échanges entre les différents modules de processus de l'OS.

L'invention propose à cet effet un procédé de communication inter-processus dans lequel les processus communiquent entre eux au sein de l'OS par l'intermédiaire de tubes attribués par l'OS, cette communication étant sécurisée grâce au procédé exposé dans la revendication 1.

Les sous-revendications visent des modes de mise en œuvre subsidiaires, avantageux, de ce procédé.

### Brève description des dessins

On va maintenant décrire un exemple de mise en œuvre de l'invention, en référence aux dessins annexés où les mêmes références désignent d'une figure à l'autre des éléments identiques ou fonctionnellement semblables.
La Figure 1 montre les principaux blocs fonctionnels impliqués par la mise en œuvre de l'invention.
La Figure 2 présente les étapes successives de procédé de la phase préliminaire de création d'un paquet incorporant l'ensemble des modules de processus, le composant coordinateur sécurisé permettant leur interconnexion, et le fichier de signatures associé.
La Figure 3 présente les étapes successives de procédé de la phase initiale de création des tubes associés aux divers modules de processus respectifs.
La Figure 4 présente les étapes successives de procédé conduisant à l'interconnexion de deux modules de processus entre eux, conformément aux enseignements de l'invention.

### Description des modes de réalisation

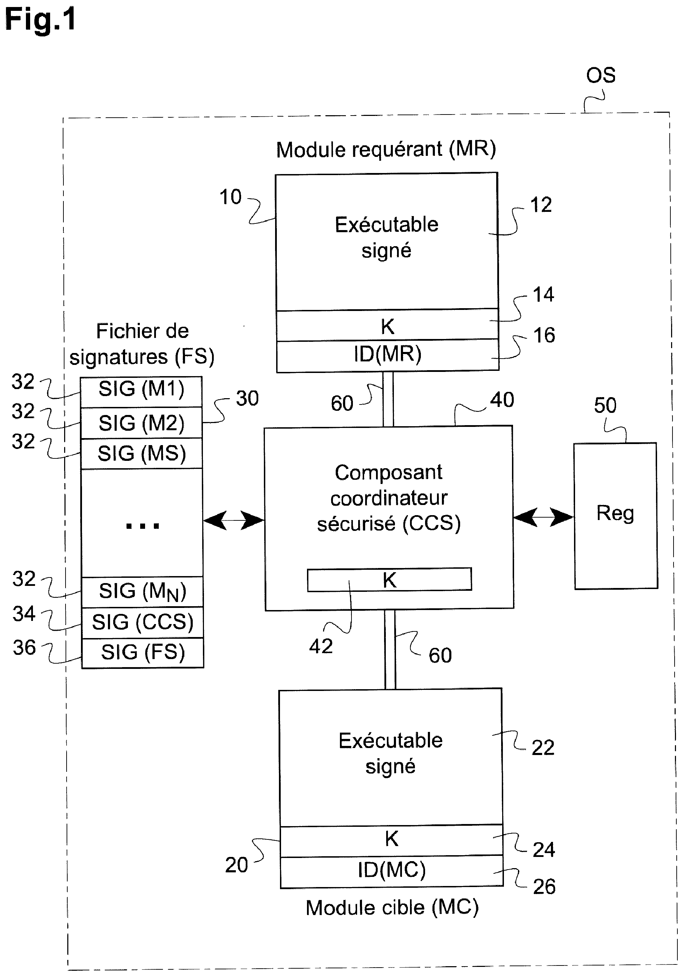

La Figure 1 illustre sous forme de blocs fonctionnels les différents éléments interagissant ensemble pour assurer une communication sécurisée entre processus d'un OS de calculateur.

On notera que les éléments fonctionnels 10, 20 ... 60 représentés sur la Figure 1 font tous partie intégrante d'un même OS, de sorte que l'invention est mise en œuvre de façon totalement autonome au sein de cet OS, sans connexion ni échange avec le monde extérieur, donc sans risque d'intrusion ou d'interception par un tiers lors de la mise en œuvre de l'interconnexion, ni de diffusion d'informations sensibles hors de l'OS et du calculateur.

L'OS comprend une multitude de modules de processus différents, s'exécutant à divers niveaux de privilège. Sur la Figure 1 on a représenté deux de ces modules 10, 20, pour illustrer l'établissement d'une connexion entre processus à l'initiative d'un module requérant MR 10, à destination d'un module cible MC 20. Mais l'OS comprend en fait un très grand nombre N de tels modules M₁ ... M_{N}, qui seront désignés de façon générale Mᵢ.

Chaque module de processus incorpore un exécutable de processus tel que 12, 22 ..., une clé publique K telle que 14, 24, ..., avec la même clé K pour tous les modules, et un identifiant de module ID(Mᵢ) tel que 16, 26, ..., propre au module de processus.

Chaque module de processus Mᵢ a fait l'objet d'une signature préalable par une opération de signature asymétrique avec une paire clé publique(K)/clé privée, dont il résulte une signature SIG(Mᵢ).

Toutes les signatures des modules de processus sont mémorisées dans un fichier de signatures FS, référencé 30 sur la Figure 1, dans des rubriques respectives SIG(M₁) ... SIG(M_{N}), référencées 32.

Pour établir les interconnexions entre modules de processus, il est prévu de mettre en œuvre un composant coordinateur sécurisé CCS ou orchestrateur, ci-après "composant CCS", référencé 40 sur la Figure 1, permettant notamment d'authentifier et de coordonner entre eux les modules de processus du système.

Concrètement, le composant CCS 40 peut être réalisé sous la même forme qu'un module de processus, avec un code propre exécutable par l'OS.

Le composant CCS 40 incorpore également la clé publique K en 42, et il a fait aussi l'objet d'une opération de signature asymétrique par la paire clé publique(K)/clé privée, dont il résulte une signature SIG(CCS). La signature SIG(CCS) du composant CCS est mémorisée dans le fichier de signatures FS, en 34.

Enfin, le fichier de signatures FS fait l'objet également d'une signature par l'opération de signature asymétrique avec la paire clé publique(K)/clé privée, dont il résulte une signature de fichier de signatures SIG(FS), mémorisée dans le fichier de signatures, en 36.

Le fichier de signatures FS est accédé par le composant CCS 40. Dans le cas où l'interconnexion entre modules se fait par l'intermédiaire de tubes nommés (par opposition à des tubes anonymes), le composant CCS a également accès au Registre 50, ce Registre étant un élément conventionnel de l'OS, par exemple la base de registre *Windows Registry* du système d'exploitation Windows, qui contient les données de configuration de l'OS et qui est accessible en interne aux différents modules de l'OS.

Enfin, le composant CCS communique avec chacun des modules Mᵢ par des paires de tubes écriture/lecture 60, propres à chaque module de processus, les modules ne pouvant pas communiquer directement entre eux, mais seulement par l'intermédiaire du composant CCS 40.

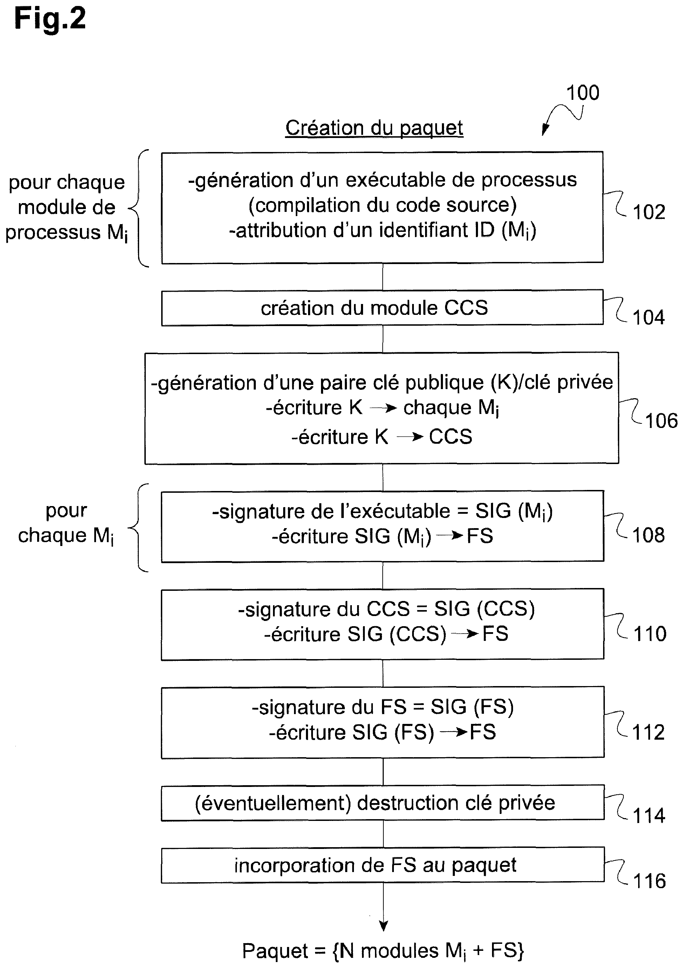

Sur la Figure 2, on a illustré les étapes successives de procédé d'une phase préliminaire 100 de création d'un paquet ou "package" incorporant l'ensemble des modules de processus Mᵢ, le composant CCS, et le fichier de signatures FS qui lui est associé.

Ce procédé comprend tout d'abord (bloc 102), pour chacun des modules de processus Mᵢ, la génération d'un exécutable de processus par compilation du code source et édition des liens. Un identifiant ID(Mᵢ) est ensuite attribué au module, propre à celui-ci.

L'étape suivante (bloc 104) consiste à créer le module correspondant au composant CCS, avec un code spécifique exécutable par l'OS, préalablement à toute interconnexion entre modules de processus.

L'étape suivante (bloc 106) consiste à générer une paire clé publique/clé privée destinée à effectuer les opérations de signature décrites ci-après.

La clé publique K est inscrite dans chacun des modules de processus Mᵢ (en 14, 24, ... sur la Figure 1) ainsi que dans le composant CCS (en 42 sur la Figure 1).

L'étape suivante (bloc 108) consiste, à signer l'exécutable de chaque module de processus Mᵢ, donnant une signature SIG(Mᵢ), et à mémoriser cette signature SIG(Mᵢ) dans le fichier de signatures FS (en 32 sur la Figure 1).

L'étape suivante (bloc 110) consiste à effectuer la signature du composant CCS, donnant une signature SIG(CCS). Cette signature SIG(CCS) est, de la même façon, mémorisée dans le fichier de signatures FS (en 34 sur la Figure 1).

L'étape suivante (bloc 112) consiste, une fois les opérations précédentes effectuées, à signer le fichier de signatures FS, donnant une signature SIG(FS), qui est également mémorisée dans le fichier de signatures (en 36 sur la Figure 1).

L'étape suivante (bloc 114), qui est une étape facultative mais avantageuse sur le plan de la sécurité, consiste à détruire la clé privée utilisée pour les différentes opérations de signature précédentes ; en effet, cette clé ne sera plus nécessaire pour la suite et peut être supprimée.

Enfin (étape 116) le fichier de signatures FS est incorporé au paquet, qui réunit donc N modules du processus Mᵢ, le module CCS, et le fichier de signatures FS associé à l'ensemble de ces modules.

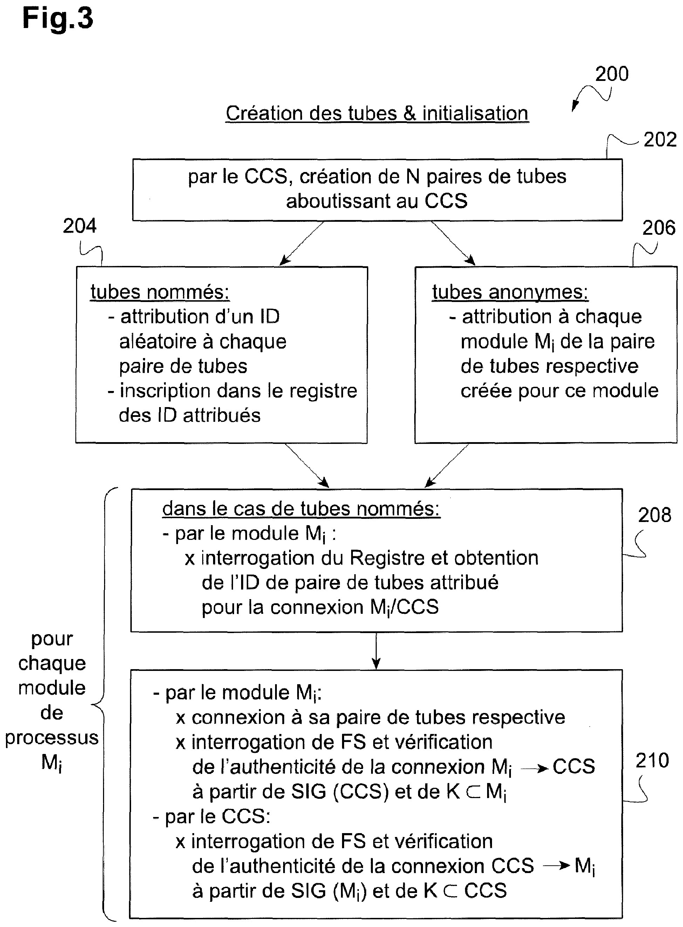

Sur la Figure 3, on a illustré les étapes successives de procédé de la phase initiale 200 de création des tubes associés aux divers modules de processus Mᵢ respectifs.

Ce procédé comprend tout d'abord (bloc 202) la création par le composant CCS de N paires de tubes aboutissant au composant CCS, chaque paire de tubes étant destinée à relier le composant CCS à un module Mᵢ respectif du paquet précédemment créé.

Dans le cas où les tubes sont des tubes nommés (bloc 204), un identifiant aléatoire est attribué à chacune des N paires de tubes, et cet identifiant est inscrit dans le Registre de l'OS (référencé 50 sur la Figure 1).

Dans le cas de tubes anonymes (bloc 206), le Registre n'intervient pas (puisque les tubes sont anonymes) et la paire de tubes créée à l'étape précédente 202 est attribuée au module Mᵢ correspondant.

Les étapes suivantes (blocs 208 et 210) sont répétées pour chaque module de processus Mᵢ.

Dans le cas de tubes nommés (étape 208) le module Mᵢ interroge le Registre pour obtenir l'identifiant de la paire de tubes qui lui a été attribuée précédemment à l'étape 204, de manière à pouvoir instaurer une connexion de ce module Mᵢ avec le composant CCS.

Ensuite, dans tous les cas (tubes nommés ou tubes anonymes), le module Mi se connecte à la paire de tubes qui lui correspond, interroge le fichier de signatures FS via le composant CCS, et vérifie l'authenticité de la connexion du module Mᵢ vers le composant CCS. Cette vérification est effectuée à partir de la signature SIG(CCS) lue dans le fichier de signatures FS (lui-même authentifié par vérification de la signature SIG(FS)) et de la clé publique K qui avait été incorporée préalablement au module Mᵢ.

Dans le sens inverse, du composant CCS vers le module de processus Mᵢ, l'authenticité de la connexion est vérifiée par le composant CCS, qui interroge le fichier de signatures FS, obtient la signature SIG(Mᵢ) du module correspondant, et vérifie cette signature à partir de la clé K qui avait été préalablement incorporée au composant CCS (en 42 sur la Figure 1).

Une fois les paires de tubes ainsi établies et authentifiées, les modules vont pouvoir s'interconnecter entre eux.

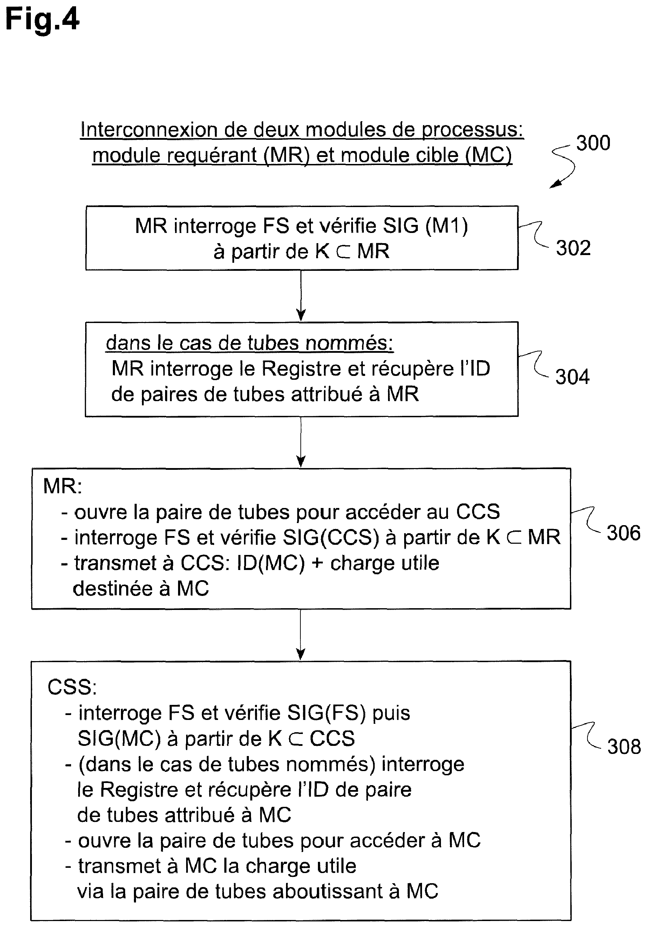

Sur la Figure 4, on a illustré les étapes successives de procédé de cette interconnexion 300, établie à l'initiative d'un module de processus requérant désigné MR, qui souhaite communiquer avec un module cible, désigné MC.

La première étape (bloc 302) consiste, par le module requérant MR, à interroger le fichier de signatures FS et vérifier la signature du fichier de signatures, à partir de SIG(FS) lue dans ce fichier FS (en 36 sur la Figure 1) et de la clé publique K qui avait été incorporée au module requérant (en 14 sur la Figure 1).

Dans le cas de tubes nommés (bloc 304), le module requérant MR interroge le Registre 50 et récupère l'identifiant de paires de tubes qui lui avait été attribué pour communiquer avec le composant CCS.

À l'étape suivante (bloc 306), le module requérant MR ouvre la paire de tubes pour accéder au composant CCS, interroge le fichier de signatures FS pour vérifier la signature SIG(CCS) du composant CCS contenue dans ce fichier de signatures (en 34 sur la Figure 1), à partir de la clé K qui avait été incorporée au module requérant (en 14 sur la Figure 1).

Le module requérant transmet alors au CCS l'identifiant ID(MC) du module cible MC avec lequel il souhaite communiquer, ainsi qu'un certain nombre de données constituant une charge utile destinée à ce module cible MC.

L'étape suivante (bloc 308) consiste, par le CCS, à interroger le fichier de signatures, à vérifier la signature SIG(FS) de celui-ci (en 36 sur la Figure 1) à partir de la clé publique K qui avait été incorporée au composant CCS (en 42 sur la Figure 1), puis à vérifier la signature SIG(MC) du module cible MC lue dans le fichier de signatures (en 32 sur la Figure 1), à partir de cette même clé K qui avait été incorporée au composant CCS (en 42 sur la Figure 1).

Dans le cas du tubes nommés, le composant CCS interroge le Registre 50 et récupère l'identifiant de la paire de tubes attribuée au module cible MC.

Le composant CCS peut alors ouvrir la paire de tubes pour accéder au module cible MC, et transmettre à ce dernier la charge utile communiquée par le module requérant, via la paire de tubes aboutissant au module cible MC.

Les deux modules, module requérant MR et module cible MC, peuvent alors continuer à communiquer entre eux en toute sécurité au sein de l'OS.

## Revendications

1. Un procédé de communication inter-processus sécurisée,
dans lequel les processus communiquent entre eux au sein d'un système d'exploitation (OS) d'un ordinateur par l'intermédiaire de tubes (60) attribués par le système d'exploitation,
dans lequel chaque processus est mis en œuvre par un module de processus (10, 20, ...) respectif comprenant :
- un exécutable de processus (12, 22), préalablement signé par une opération de signature asymétrique avec une paire clé publique/clé privée ;
- ladite clé publique (14, 24) ; et
- un identifiant de module (16, 26),
dans lequel le système d'exploitation (OS) comprend également :
- un fichier de signatures (30), comprenant :
• pour chaque module de processus, la signature de processus (32) respective résultant de ladite opération de signature asymétrique de l'exécutable de processus,
• une signature de fichier de signatures (36), résultant d'une opération de signature asymétrique préalable du fichier de signatures avec ladite paire clé publique/clé privée, et
• une signature de composant coordinateur (34) ; et
- un composant coordinateur sécurisé (40), apte à communiquer avec le fichier de signatures (30) et avec les modules de processus (10, 20, ...) et à contrôler l'échange de données entre les modules de processus,
le procédé comprenant les étapes suivantes :
a) une étape préalable d'initialisation, comprenant :
a1) par le composant coordinateur sécurisé (40), la création d'une paire de tubes écriture/lecture pour chaque module (10, 20, ...) ;
a3) par chaque module (10, 20, ...), la connexion à la paire de tubes respective créée à l'étape a1) et la vérification que la connexion aboutit au composant coordinateur sécurisé (40), le composant coordinateur sécurisé (40) étant authentifié à partir de la signature de composant coordinateur (34) du fichier de signatures (30) et de la clé publique (14) incorporée au module ;
a4) par le composant coordinateur sécurisé (40), la vérification que la connexion de l'étape a3) provient d'un module authentifié à partir de la signature de processus respective (32) du fichier de signatures (30) et de la clé publique (14) mémorisée dans le composant coordinateur sécurisé (40) ; et
b) Sur requête d'un module requérant (MR) :
b1) par le module requérant (MR), la transmission au composant coordinateur sécurisé (40), par la paire de tubes respective créée à l'étape a1) pour le module requérant (MR), d'un message et d'un identifiant de module (26) d'un module de processus cible (MC) destinataire du message ; et
b2) par le composant coordinateur sécurisé (40), la transmission du message au module de processus cible (MC), par la paire de tubes respective créée à l'étape a1) pour le module cible (MC).

2. Le procédé de la revendication 1, dans lequel il est prévu en outre, préalablement à l'exécution de l'étape a), une étape initiale de création d'un paquet comprenant l'ensemble des modules de processus (10, 20, ...) d'un programme de calculateur donné, comprenant successivement :
- la génération des exécutables de processus respectifs de tous les modules de processus (10, 20,...) du programme ;
- la génération d'une paire clé publique/clé privée ;
- l'incorporation de ladite clé publique dans chacun des exécutables des modules de processus (10, 20, ...) et dans le composant coordinateur sécurisé (40) ;
- pour chaque module de processus (10, 20, ...), la réalisation d'une opération de signature asymétrique, par ladite paire clé publique/clé privée, de l'exécutable du module de processus incorporant ladite clé publique, et du composant coordinateur sécurisé (40), de manière à produire une signature de processus (32) pour chaque module de processus et une signature de composant coordinateur (34) ; et
- la création d'un fichier de signatures (30) à partir des signatures de processus (32) de chaque module de processus et de la signature de composant coordinateur (34) ;
- la réalisation d'une opération de signature asymétrique, par ladite paire clé publique/clé privée, du contenu du fichier de signatures (30), de manière à produire une signature de fichier de signatures ;
- la mémorisation, dans le fichier de signatures (30), de la signature de fichier de signatures (36) ; et
- le regroupement, dans un même paquet, de l'ensemble des modules de processus (10, 20, ...) du programme avec le fichier de signatures (30) correspondant ainsi obtenu.

3. Le procédé de la revendication 2, dans lequel la clé privée est détruite après exécution de toutes les opérations de signature asymétrique.

4. Le procédé de la revendication 1, dans lequel les tubes (60) sont des tubes nommés, avec pour chaque paire de tubes un identifiant de paire de tubes qui lui est propre, et dans lequel le procédé comprend en outre :
- à l'étape a1), par le composant coordinateur sécurisé (40), l'attribution de manière aléatoire à chaque paire de tubes d'un identifiant de paire de tubes respectif,
- entre les étapes a1 et a3) une étape a2) d'inscription, par le composant coordinateur sécurisé (40), dans une base de registre (50) du système d'exploitation (OS), des identifiants de paires de tubes attribués, et
- à l'étape a3), l'interrogation de la base de registre (50) par le module requérant et l'obtention de l'identifiant aléatoire de paire de tubes correspondant à la paire de tubes d'interconnexion avec le module.

5. Le procédé de la revendication 1, dans lequel les tubes (60) sont des tubes anonymes, et dans lequel le procédé comprend en outre :
- entre les étapes a1 et a3) une étape a2) d'attribution aux modules des paires de tubes respectives créées à l'étape a1).

## Patentansprüche

1. Ein Verfahren zur sicheren Interprozesskommunikation, wobei die Prozesse innerhalb eines Betriebssystems (OS) eines Rechners mittels Pipes (60), die durch das Betriebssystem zugewiesen werden, miteinander kommunizieren,
wobei jeder Prozess durch einen jeweiligen Prozessbaustein (10, 20) ausgeführt wird, umfassend:
- eine ausführbare Datei des Prozesses (12, 22), die vorher durch einen Vorgang zum asymmetrischen Signieren mit einem privaten/öffentlichen Schlüsselpaar signiert wurde;
- den öffentlichen Schlüssel (14, 24); und
- eine Modulkennung (16, 26),
wobei das Betriebssystem (OS) ferner umfasst:
- eine Signaturendatei (30), umfassend:
• für jeden Prozessbaustein, die aus dem Vorgang zum asymmetrischen Signieren der ausführbaren Datei des Prozesses resultierende jeweilige Prozesssignatur (32),
• eine Signaturendateisignatur (36), die aus einem vorangehenden Vorgang zum asymmetrischen Signieren der Signaturendatei mit dem privaten/öffentlichen Schlüsselpaar resultiert, und
• eine Koordinationskomponentensignatur (34); und
- eine sichere Koordinationskomponente (40), die imstande ist, mit der Signaturendatei (30) und mit den Prozessbausteinen (10, 20,...) zu kommunizieren und den Datenaustausch zwischen den Prozessbausteinen zu kontrollieren,
wobei das Verfahren die folgenden Schritte umfasst:
a) einen vorangehenden Initialisierungsschritt, umfassend:
a1) durch die sichere Koordinationskomponente (40), Erzeugen einer Schreib-Lese-Pipe für jeden Baustein (10, 20,...) ;
a3) für jeden Baustein (10, 20,...), Verbinden mit dem in Schritt a1) erzeugten jeweiligen Pipe-Paar und Überprüfen, dass die Verbindung zu der sicheren Koordinationskomponente (40) führt, wobei die sichere Koordinationskomponente (40) anhand der Koordinationskomponentensignatur (34) der Signaturendatei (30) und des in den Baustein eingebetteten öffentlichen Schlüssels (14) authentifiziert ist;
a4) durch die sichere Koordinationskomponente (40), Überprüfen, dass die Verbindung aus Schritt a3) von einem Baustein herstammt, der anhand der jeweiligen Prozesssignatur (32) der Signaturendatei (30) und des in der sicheren Koordinationskomponente (40) gespeicherten öffentlichen Schlüssels (14) authentifiziert ist; und
b) auf Anfrage eines anfragenden Bausteins (MR):
b1) durch den anfragenden Baustein (MR), Übermitteln an die sichere Koordinationskomponente (40), durch das in Schritt a1) für den anfragenden Baustein (MR) erzeugte jeweilige Pipe-Paar, einer Nachricht und einer Bausteinkennung (26) eines Zielprozessbausteins (MC), für den die Nachricht bestimmt ist; und
b2) durch die sichere Koordinationskomponente (40), Übermitteln der Nachricht an den Zielprozessbaustein (MC) durch das in Schritt a1) für den Zielbaustein (MC) erzeugte jeweilige Pipe-Paar.

2. Das Verfahren nach Anspruch 1, wobei, vor dem Ausführen von Schritt a), ferner ein Ausgangsschritt zum Erzeugen eines Pakets vorgesehen ist, das den Satz von Prozessbausteinen (10, 20,...) eines bestimmten Rechenprogramms enthält, nacheinander umfassend:
- Erzeugen der jeweiligen ausführbaren Dateien des Prozesses aller Prozessbausteine (10, 20,...) des Programms;
- Erzeugen eines privaten/öffentlichen Schlüsselpaares;
- Einbetten des öffentlichen Schlüssels in jede der ausführbaren Dateien der Prozessbausteine (10, 20, ...) und in die sichere Koordinationskomponente (40);
- für jeden Prozessbaustein (10, 20,...), Durchführen eines Vorgangs zum asymmetrischen Signieren, durch das private/öffentliche Schlüsselpaar, der ausführbaren Datei des Prozessbausteins, in die der öffentliche Schlüssel eingebettet ist, und der sicheren Koordinationskomponente (40), so dass eine Prozesssignatur (32) für jeden Prozessbaustein und eine Koordinationskomponentensignatur (34) erstellt wird; und
- Erzeugen einer Signaturendatei (30) aus den Prozesssignaturen (32) jedes Prozessbausteins und der Koordinationskomponentensignatur (34);
- Durchführen eines Vorgangs zum asymmetrischen Signieren, durch das private/öffentliche Schlüsselpaar, des Inhalts der Signaturendatei (30), so dass eine Signaturendateisignatur erstellt wird;
- Speichern, in der Signaturendatei (30), der Signaturendateisignatur (36); und
- Zusammenführen, in einem gleichen Paket, des Satzes von Prozessbausteinen (10, 20,...) des Programms mit der so erhaltenen entsprechenden Signaturendatei (30).

3. Das Verfahren nach Anspruch 2, wobei der private Schlüssel nach Ausführen sämtlicher Vorgänge zum asymmetrischen Signieren vernichtet wird.

4. Das Verfahren nach Anspruch 1, wobei die Pipes (60) mit Namen versehene Pipes sind, wobei jedes Pipe-Paar eine für es spezifische Pipe-Paar-Kennung aufweist, und wobei das Verfahren ferner umfasst:
- in Schritt a1), durch die sichere Koordinationskomponente (40), zufälliges Zuweisen einer jeweiligen Pipe-Paar-Kennung an jedes Pipe-Paar,
- zwischen den Schritten a1) und a3), einen Schritt a2) zum Eintragen, durch die sichere Koordinationskomponente (40), der zugewiesenen Pipe-Paar-Kennungen in eine Verzeichnisdatenbank (50) des Betriebssystems (OS) und
- in Schritt a3), Abrufen aus der Verzeichnisdatenbank (50), durch den anfragenden Baustein, und Erhalten der zufälligen Pipe-Paar-Kennung, die dem Pipe-Paar zum Verbinden mit dem Baustein entspricht.

5. Das Verfahren nach Anspruch 1, wobei die Pipes (60) anonyme Pipes sind, und wobei das Verfahren ferner umfasst:
- zwischen den Schritten a1) und a3), einen Schritt a2) zum Zuweisen der in Schritt a1) erzeugten jeweiligen Pipe-Paare an die Bausteine.

## Claims

1. A secure inter-process communication method,
wherein the processes communicate between each other within an operating system (OS) of a computer via tubes (60) allocated by the operating system,
wherein each process is implemented by a respective process module (10, 20, ...) comprising:
- a process executable (12, 22), previously signed by an asymmetric signature operation with a public key/private key pair;
- said public key (14, 24); and
- a module identifier (16, 26),
wherein the operating system (OS) also comprises:
- a signature file (30), comprising:
• for each process module, the respective process signature (32) resulting from said asymmetric signature operation of the process executable,
• a signature file signature (36), resulting from a preliminary operation of asymmetric signature of the signature file with said public key/private key pair, and
• a coordinator component signature (34); and
- a secure coordinator component (40), adapted to communicate with the signature file (30) and with the process modules (10, 20, ...) and to control the data exchange between the process modules,
the method comprising the following steps:
a) a preliminary initialization step, comprising:
a1) by the secure coordinator component (40), creating a pair of writing/reading tubes for each module (10, 20, ...);
a3) by each module (10, 20, ...), connecting to the respective pair of tubes created at step a1) and checking that the connection reaches the secure coordinator component (40),
the secure coordinator component (40) being authenticated based on the coordinator component signature (34) of the signature file (30) and the public key (14) incorporated in the module;
a4) by the secure coordinator component (40), checking that the connection of step a3) comes from a module authenticated based on the respective process signature (32) of the signature file (30) and the public key (14) stored in the secure coordinator component (40); and
b) upon request from a requesting module (RM):
b1) by the requesting module (RM), transmitting to the secure coordinator component (40), by the respective pair of tubes created at step a1) for the requesting module (RM), a message and a module identifier (26) of a target process module (TM) recipient of the message; and
b2) by the secure coordinator component (40), transmitting the message to the target process module (TM), by the respective pair of tubes created at step a1) for the target module (TM).

2. The method of claim 1, wherein it is further provided, prior to performing step a), an initial step of creating a packet comprising the set of process modules (10, 20, ...) of a given calculator program, comprising successively:
- generating respective process executables of all the process modules (10, 20, ...) of the program;
- generating a public key/private key pair;
- incorporating said public key in each of the executables of the process modules (10, 20, ...) and in the secure coordinator component (40);
- for each process module (10, 20, ...), performing an operation of asymmetric signature, by said public key/private key pair, of the process module executable incorporating said public key, and of the secure coordinator component (40), so as to produce a process signature (32) for each process module and a coordinator component signature (34); and
- creating a signature file (30) from the process signatures (32) of each process module and of the coordinator component signature (34);
- performing an asymmetric signature operation, by said public key/private key pair, of the content of the signature file (30), so as to produce a signature file signature;
- storing, in the signature file (30), the signature file signature (36); and
- grouping, in a same packet, the set of process modules (10, 20, ...) of the program with the so-obtained corresponding signature file (30).

3. The method of claim 2, wherein the private key is destroyed after all the asymmetric signature operations have been performed.

4. The method of claim 1, wherein the tubes (60) are named tubes, with for each pair of tubes its own unique tube pair identifier, and wherein the method further comprises:
- at step a1), by the secure coordinator component (40), randomly allocating to each pair of tubes a respective tube pair identifier,
- between steps a1) and a3), a step a2) of writing, by the secure coordinator component (40), in a register base (50) of the operating system (OS), the allocated tube pair identifiers, and
- at step a3), interrogating the register base (50) by the requesting module and obtaining the random tube pair identifier corresponding to the pair of module interconnection tubes.

5. The method of claim 1, wherein the tubes (60) are anonymous tubes, and wherein the method further comprises:
- between steps a1) and a3), a step a2) of allocating to the modules respective tube pairs created at step a1).
